# EUROPEAN PATENT SPECIFICATION

(11) **EP 0 439 366 B1**
(45) Date of publication and mention of the grant of the patent: **19.03.1997**
(21) Application number: 91300581.5
(22) Date of filing: 25.01.1991
(51) Int. Cl.: G11B 15/58, G11B 23/113

(54) **Tape tension controller**
Bandspannungssteuervorrichtung
Dispositif de réglage de tension de bande

(30) Priority: 26.01.1990 JP 16371/90
(43) Date of publication of application: 31.07.1991
(73) Proprietor: SONY CORPORATION, Tokyo (JP)
(72) Inventor: Tanaka, Masanori, c/o Sony Magnetic Prod.,Inc., Shinagawa-ku, Tokyo (JP); Wakabayashi, Masanori, c/o Patents Division, Shinagawa-ku, Tokyo (JP); Fukuhara, Toshimichi, c/o Patents Division, Shinagawa-ku, Tokyo (JP)
(74) Representative: Nicholls, Michael John

(56) References cited:
- EP-A- 0 016 866
- EP-A- 0 025 534
- FR-A- 2 089 880
- GB-A- 1 109 014
- US-A- 3 499 614
- US-A- 3 888 480
- US-A- 3 948 463

## Description

The present invention generally relates to apparatus for controlling a tape tension and, more particularly, is directed to an apparatus having a vacuum chamber for controlling a tape tension in which a slackened portion of a tape is introduced into a vacuum chamber and the tape is absorbed by a negative pressure within the vacuum chamber, thereby the tape being applied with a tension.

Conventionally, when a tape cassette is manufactured, a cassette casing and a magnetic tape are prepared independently and the-magnetic tape is wound around a reel provided within the cassette casing by an apparatus described, for example, in EP-A2-0 293 305 (or Japanese Laid-Open Patent Gazette No 63-300475). To be more precise, a leader tape fixed to the reel within the cassette casing is cut and the magnetic tape is connected to an end portion of the thus cut leader tape. Then, the magnetic tape is wound around the reel by a predetermined amount by rotating the reel. After the magnetic tape is wound around the reel, the rear end of the magnetic tape is cut and connected to a free end of the leader tape connected to an opposite reel, thereby being wound within the tape cassette.

When the magnetic tape is wound within the tape cassette as set forth above, a tape tension of the magnetic tape must be kept at substantially a constant value. To this end, a tension arm is provided in the tape running path of the magnetic tape and the tension arm is rotated in response to the change of the magnetic tape so as to adjust the tape tension.

In such tape winding apparatus, the control operation for controlling a tape tension by the tension arm has a problem with the response characteristic. That is, if the magnetic tape is wound at high speed in order to increase productivity in winding the magnetic tape within the tape cassette, there is then the disadvantage that the tension arm cannot follow the change of the tape tension. Accordingly, the conventional tape winding apparatus utilising the tension arm has a shortcoming that the tape winding speed is limited.

In order to remote the aforenoted disadvantages, it has been proposed to wind the magnetic tape around the reels while a tension is being applied to the magnetic tape by a vacuum chamber. Such a system is described in US-A-3 888 480 on which the precharacterising portion of claim 1 is based. The position of the tape loop in the vacuum chamber is detetected to perform tape tension control by driving the supplying reel. The speed of the tape is controlled in response to a tape tacho.

GB-A-1 109 014 discloses a vacuum tape buffer for a data storage device in which a varying area groove is provided in the side of the vacuum chamber as a leakage path past the tape. The size of the leakage path varies with tape position and thus tension. US-A-4 306 689 discloses a vacuum tape buffer in which a row of leakage holes are provided more or less of which are uncovered as the tape loop moves. The pressure behind the tape loop is detected to detect the tape position.

Accordingly, it is an object of the present invention to provide an improved tape winding apparatus having a vacuum chamber for controlling a tape tension.

More specifically, it is an object of the present invention to provide a tape winding apparatus having a vacuum chamber for controlling a tape tension in which a tape tension during the tape winding process can be controlled so as to be become optimum.

It is another object of the present invention to provide a tape winding apparatus having a vacuum chamber for controlling a tape tension in which control of the tape tension can be effected satisfactorily during a highspeed tape winding process.

Thus, the present invention provides an apparatus for winding a tape into a tape cassette comprising a motor for rotating a reel of said tape cassette onto which the magnetic tape is to be wound and apparatus for controlling a tape tension in which a slackened portion of a tape is introduced into a vacuum chamber, said tape is absorbed by a negative pressure within said vacuum chamber and a tape tension is detected on the basis of an absorbed amount of said tape, characterised in that a recess is formed on an inner surface of said vacuum chamber so as to provide a vacuum leakage path past the tape, the cross-section of said recess varying in the direction of movement of the absorbed tape with varying tension, whereby the vacuum leakage past the tape via the recess varies in response to the absorbed amount of said tape which varies with the tape tension, and the pressure change behind the tape in response to the leakage is detected by a pressure gauge, and wherein the torque of the motor for rotating the reel of said tape cassette around which said magnetic tape is wound is controlled on the basis of the detected value.

The invention will be further described in the following detailed description of an illustrative embodiment thereof to be taken in conjunction with the accompanying drawings, in which like reference numerals are used to identify the same or similar parts in the several views, and in which:-
Figure 1 is a front view illustrating an overall arrangement of a magnetic tape winding apparatus to which an embodiment of a tape tension control apparatus according to the present invention is applied;
Figure 2 is a longitudinal cross-sectional view of an embodiment of a vacuum chamber according to the present invention;
Figure 3 is a cross-sectional view taken through the line III-III in Figure 2; and
Figure 4 is a front view of the overall arrangement of the magnetic tape winding apparatus, and to which references will be made in explaining a rewinding operation of a magnetic tape.

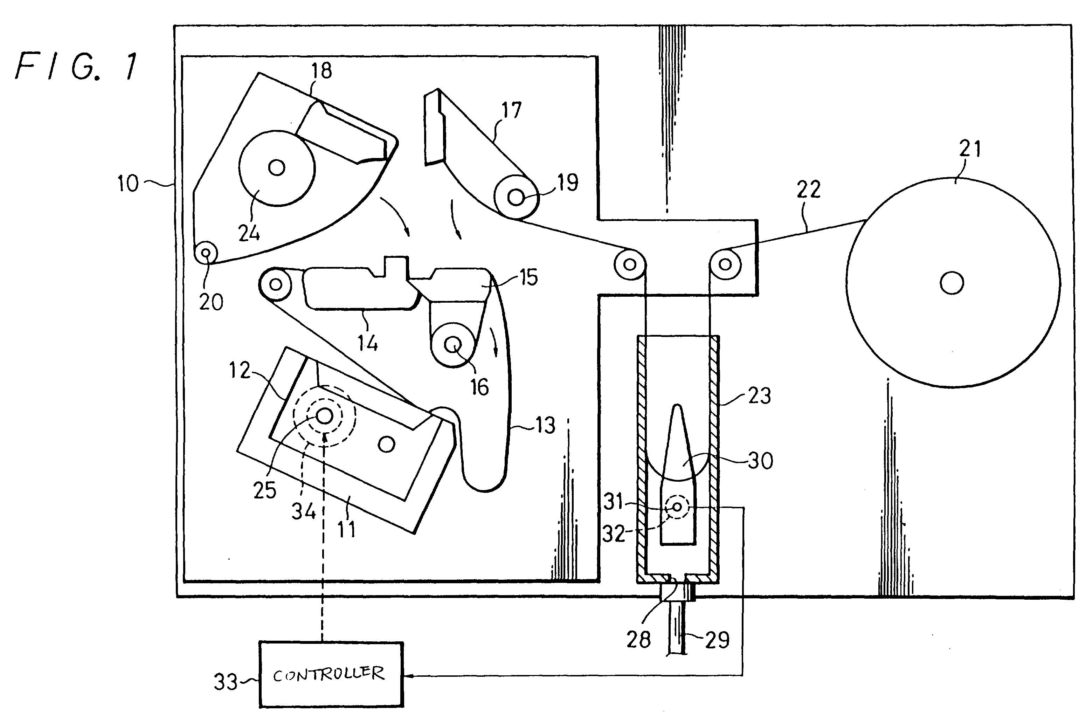

Referring to the drawings in detail and initially to Figure 1, there is shown a magnetic tape winding apparatus to which an embodiment of a tape tension control apparatus according to the present invention is applied.

The tape winding apparatus 10 is provided at its front wall side with a tape holder 11 to which a tape cassette 12 is loaded. A magnetic tape is not yet wound within the tape cassette 12 but instead, only a leader tape 13 is wound within the tape cassette 12 in the condition such that it is fixed to two reels. A tape supporting unit 14 and a first splicing unit 15 are provided successively in the vicinity of the tape cassette 12. The tape supporting unit 14 is fixed at position, whereas the first splicing unit 15 is rotatable about a rotary shaft 16 and can be spaced apart from the tape supporting unit 14.

Second and third splicing units 17 and 18 are provided above the tape supporting unit 14, and the second splicing unit 17 is made rotatable about a rotary shaft 19. The third splicing unit 18 is made rotatable about a rotary shaft 20 so that, when the second and third splicing units 17 and 18 are rotated about the rotary shafts 19 and 20, they are brought in contact with the tape supporting unit 14.

Further, this tape winding apparatus 10 is provided with a reel 21 of a large diameter, and a magnetic tape 22 is wound around the reel 21. The magnetic tape 22 withdrawn from the reel 21 is supplied to the second splicing unit 17 through a tension applying portion formed of a vacuum chamber 23, and a splicing tape is wound around a reel 24 on the third splicing unit 18.

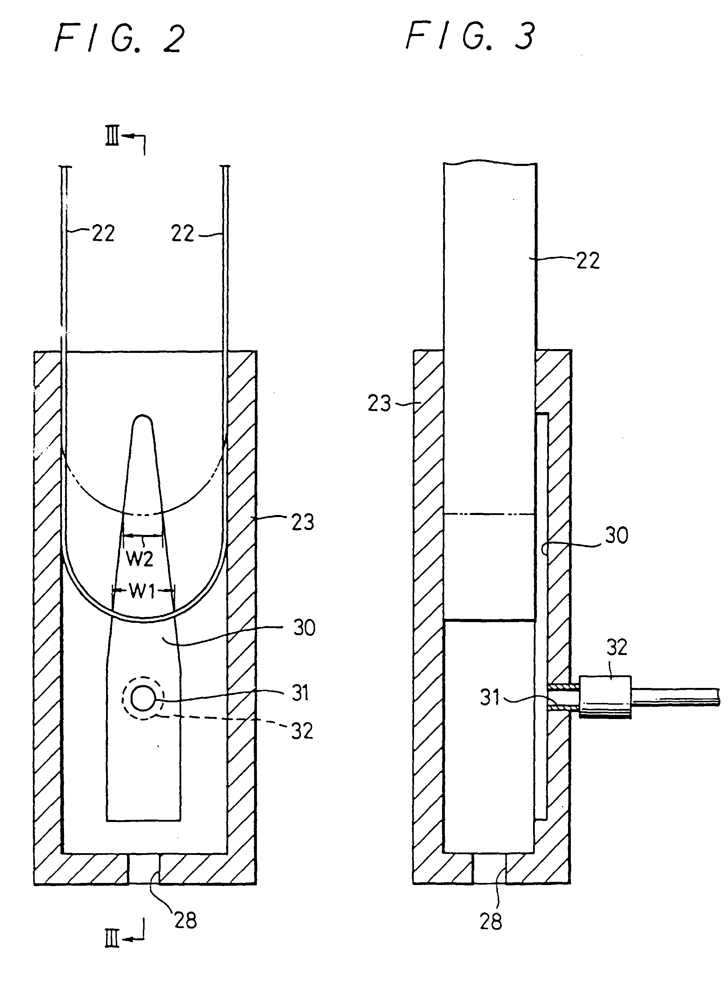

The vacuum chamber 23 for applying a tension to the magnetic tape 22 will be described with reference to Figs. 2 and 3.

As shown in Figs. 2 and 3, the vacuum chamber 23 is composed of a box of a rectangular solid configuration whose upper end is opened, and a suction opening 28 is bored through the lower end wall of the vacuum chamber 23. This suction opening 28 is connected to a vacuum source (not shown) through a suction pipe 29 shown in Fig. 1.

Particularly, a slit or groove 30 is formed within the vacuum chamber 23 as shown in Fig. 2. The slit 30 is formed on the bottom wall portion of the vacuum chamber 23 so as to oppose one end portion of the magnetic tape 22, and the upper portion of the slit 30 is shaped as V-letter configuration so that the width thereof changes. The depth of the slit 30 is constant as shown in Fig. 3. A small aperture 31 is formed through the bottom wall of the vacuum chamber 23 so as to oppose the slit 30 and a pressure gauge 32 is attached to the vacuum chamber 23 so as to communicate with the small aperture 31. As shown in Fig. 1, the pressure gauge 32 is connected to a controller 33 and the controller 33 controls a motor 34 which rotates the reel 25 of the tape cassette 12.

A winding operation for winding the magnetic tape by the magnetic tape winding apparatus 10 will be explained hereinafter.

When the magnetic tape 22 is wound within the tape cassette 12 shown in Fig. 1, the leader tape 13 is withdrawn from the tape cassette 12 loaded onto the cassette holder 11 and the thus withdrawn leader tape 13 is supplied to the tape supporting unit 14 and the first splicing unit 15. The leader tape 13 is cut by the first splicing unit 15 and one end portion and the other end portion of the thus cut leader tape 13 are supported by the tape supporting unit 14 and the first splicing unit 15.

Then, the first splicing unit 15 is rotated and made apart from the tape supporting unit 14. The second and third splicing units 17 and 18 are rotated to come in contact with the tape supporting unit 14, whereby the end portion of the magnetic tape 22 supplied to the second splicing unit 17 is connected to one end of the leader tape 13 supported by the tape supporting unit 14 by the splicing tape withdrawn from the third splicing unit 18.

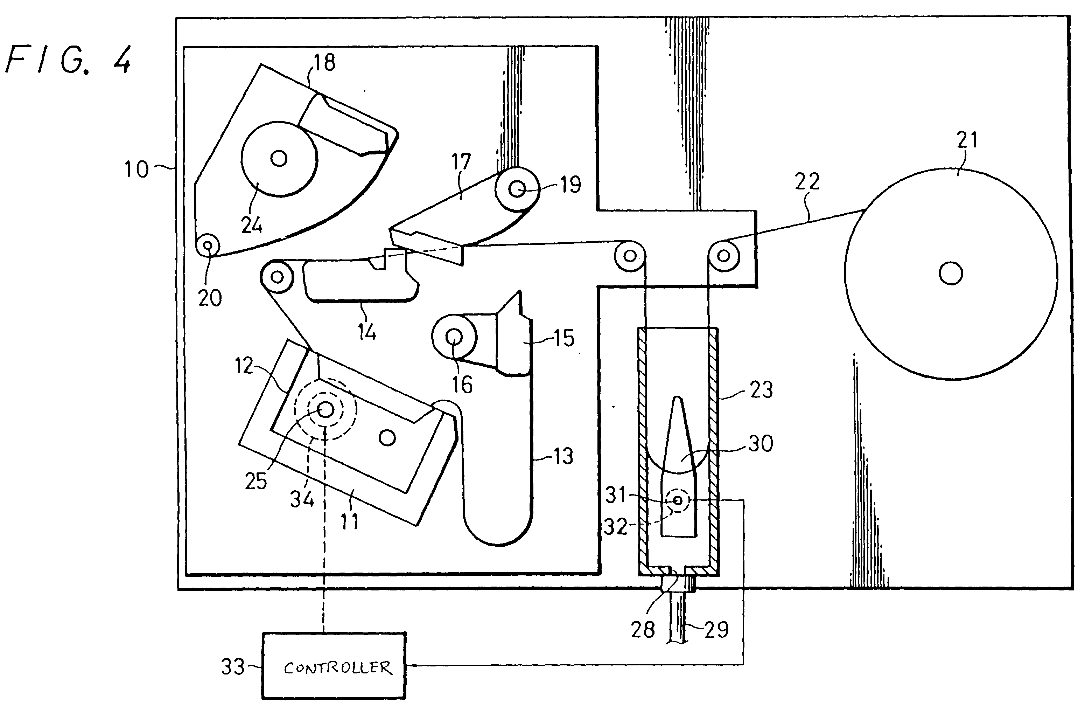

At the completion of the aforementioned connecting work is finished, as shown in Fig. 4, the third splicing unit 18 is returned to the original position and only the second splicing unit 17 is in contact with the tape supporting unit 14. Then, when the reel 25 of the tape cassette 12 is rotated at high speed by the motor 34, the magnetic tape 22 supplied from the reel 21 can be wound by the reel 25. Incidentally, at that time, a predetermined tension is applied to the magnetic tape 22 by the vacuum chamber or tape tension applying portion 23, thereby the magnetic tape 22 being wound around the reel 25 satisfactorily.

When the winding of the magnetic tape 22 around the reel 25 is finished, then the magnetic tape 22 is cut by the second splicing unit 17, and the thus cut magnetic tape 22 is supported at its end portion wound within the tape cassette 12 by the tape supporting unit 14. Thereafter, the second splicing unit 17 is rotated to the original position.

Then, the first and third splicing units 15 and 18 are rotated again to come in contact with the tape supporting unit 14, and the other end portion of the leader tape 13 supported by the first splicing unit 15 and the rear end portion of the magnetic tape 22 supported by the tape supporting unit 14 are connected together via the splicing tape. The thus connected tape is released from the tape supporting unit 14 and the first splicing unit 15 and the reel 25 of the tape cassette 12 is rotated to urge the tape to be completely wound within the tape cassette 12. In this fashion, the magnetic tape 22 is wound within the tape cassette 12 by the magnetic tape winding apparatus 10, thus the tape cassette in which the magnetic tape 22 is wound being completed.

An operation of the vacuum chamber 23 in which an optimum tension is always applied to the magnetic tape 22 when the magnetic tape 22 is wound within the tape cassette 12 will be explained below.

The tension of the magnetic tape 22 is controlled by means of the vacuum chamber 23 having the tapered slit 30 as follows. That is, while the magnetic tape 22 is wound within the tape casette 12, the position of the curved portion of the magnetic tape 22 within the vacuum chamber 23 (which depends on the tension) is detected by the change of vacuum pressure caused by the shaping of the tapered slit 30, and this change of vacuum pressure is converted into an electrical signal by the pressure gauge or pressure sensor 32. Thus, the motor 34, which rotates the reel 25, is controlled by the controller 33 in response to the detection by the pressure sensor 32, whereby the tension of the magnetic tape 22 during the winding can be changed so as to become optimum.

Since widths W1 and W2 of the positions at which the magnetic tape 22 crosses the slit 30 are different from each other between the position of the magnetic tape 22 shown by a solid line and the position shown by a two-dot chain line in Fig. 2 even when the vacuum pressure within the vacuum chamber 23 which is exerted via the suction pipe 28 is constant, the amounts of air leaked through the slit 30 are different so that the pressure sensor 32 can detect the change of pressure below the tape corresponding to the amount of air leaked through the slit 30. Then, the output of the pressure sensor 32 is fed back to the winding-side motor 34, whereby the position of the magnetic tape 22 within the chamber 23 can be controlled. It is to be appreciated that to control the position of the magnetic tape 22 is the same as controlling the tension of the magnetic tape 22 during the winding process.

In accordance with this embodiment, the vacuum chamber 23 is provided with the tapered slit 30 which is used to detect the change of the top portion of the magnetic tape 22 as the change of pressure. Accordingly, in this tape tension control apparatus utilizing the vacuum chamber 23, the tension of the magnetic tape 22 can be changed so as to become optimum during the winding process. Further, since the problem of follow-up property encountered with the conventional rotating type tension arm is removed, the magnetic tape 22 can be wound within the tape cassette 12 at high speed by the magnetic tape winding apparatus 10 shown in Fig. 1, which can improve productivity in the manufacturing process of the tape cassette.

As described above, according to the present invention, the tapered depression is formed on the inner surface of the vacuum chamber so as to oppose the end portion of the magnetic tape along its width direction, and so the apparent width of the slit changes in response to the absorbed amount of the magnetic tape introduced into the vacuum chamber. As a consequence, the amount of air leaked through the slit changes in response to the absorbed amount of the magnetic tape and the pressure, which changes in response to the amount of air leaked through the slit is detected by the pressure gauge or pressure sensor. Thus, the tape tension can be controlled so as to become optimum without changing the absorbing pressure of the vacuum chamber. Furthermore, since the tape tension control apparatus of the present invention has no movable portion unlike the conventional tension arm, the problem of the follow-up property of the tension arm can be removed and hence, the tape tension can be varied in response to the high-speed tape winding.

## Claims

1. An apparatus for winding a tape into a tape cassette (12) comprising a motor (34) for rotating a reel of said tape cassette (12) onto which the magnetic tape is to be wound and apparatus for controlling a tape tension in which a slackened portion (22) of a tape is introduced into a vacuum chamber (23), said tape (22) is absorbed by a negative pressure within said vacuum chamber (23) and a tape tension is detected on the basis of an absorbed amount of said tape (22), characterised in that a recess (30) is formed on an inner surface of said vacuum chamber (23) so as to provide a vacuum leakage path past the tape (22), the cross-section of said recess varying in the direction of movement of the absorbed tape with varying tension, whereby the vacuum leakage past the tape via the recess varies in response to the absorbed amount of said tape which varies with the tape tension, and the pressure change behind the tape in response to the leakage is detected by a pressure gauge, and wherein the torque of the motor (34) for rotating the reel of said tape cassette (12) around which said magnetic tape is wound is controlled on the basis of the detected value.

2. Apparatus according to claim 1 wherein the recess (30) is positioned so as to oppose the end portion of said tape (22) in its width direction.

3. Apparatus according to claims 1 or 2, wherein the width of the recess varies to provide said varying cross-section.

4. Apparatus according to claim 1, 2 or 3, wherein the depth of the recess varies to provide said varying cross-section.

5. Apparatus according to any one of claims 1 to 4, wherein the cross-section of the recess decreases in the direction of tape movement with increasing tension.

6. Apparatus according to any one of claims 1 to 4, wherein the cross-section of the recess increases in the direction of tape movement with increasing tension.

7. An apparatus for winding a magnetic tape within a tape cassette according to any one of the preceding claims, in which said tape cassette (12) houses two reels wherein one end of a leader tape (13) is fixed to one reel and one end of said magnetic tape (22) is connected to the other end of said leader tape (13) by a splicing tape and then said magnetic tape is wound, while after said magnetic tape is wound by a predetermined amount, the other end of said magnetic tape is connected to the other end of said leader tape fixed to the other reel by said splicing tape.

## Patentansprüche

1. Gerät zum Spulen eines Bandes in eine Bandkassette (12), mit einem Motor (34) zum Drehen einer Spule der Bandkassette (12), auf die das Magnetband gespult werden soll, und ein Gerät zum Steuern einer Bandzugspannung, bei dem ein schlaffer Bereich (22) eines Bandes in eine Vakuumkammer (23) eingeführt wird, wobei das Band (22) durch einen negativen Druck innerhalb der Vakuumkammer (23) angesaugt und eine Bandzugspannung auf der Basis eines Ansaugbetrags des Bandes (22) ermittelt wird,
**dadurch gekennzeichnet, daß**
eine Ausnehmung (30) auf einer Innenfläche der Vakuumkammer (23) gebildet ist, um einen Vakuumableitungspfad hinter dem Band (22) bereitzustellen, wobei der Querschnitt der Ausnehmung in der Verschieberichtung des angesaugten Bandes mit der sich ändernden Zugspannung sich ändert, wodurch die Vakuumableitung hinter dem Band über die Ausnehmung in Abhängigkeit vom Ansaugbetrag des Bandes sich ändert, der sich mit der Bandzugspannung ändert, und die Druckänderung hinter dem Band in Abhängigkeit von der Ableitung durch einen Druckmesser ermittelt wird, und wobei das Drehmoment des Motors (34) zum Drehen der Spule der Bandkassette (12), um die das Magnetband gespult wird, auf der Basis des ermittelten Wertes gesteuert wird.

2. Gerät nach Anspruch 1, wobei die Ausnehmung (30) so angeordnet ist, daß sie dem Endbereich des Bandes (22) in Richtung seiner Breite gegenüberliegt.

3. Gerät nach Anspruch 1 oder 2, wobei die Breite der Ausnehmung sich ändert, um den sich ändernden Querschnittsabschnitt bereitzustellen.

4. Gerät nach Anspruch 1, 2 oder 3, wobei die Tiefe der Ausnehmung sich ändert, um den sich ändernden Querschnittsabschnitt bereitzustellen.

5. Gerät nach einem der Ansprüche 1 bis 4, wobei der Querschnittsabschnitt der Ausnehmung in der Richtung der Bandverschiebung mit ansteigender Zugspannung abnimmt.

6. Gerät nach einem der Ansprüche 1 bis 4, wobei der Querschnittsabschnitt der Ausnehmung in der Richtung der Bandverschiebung mit ansteigender Zugspannung ansteigt.

7. Gerät zum Spulen eines Magnetbandes innerhalb einer Bandkassette nach einem der vorhergehenden Ansprüche, bei dem die Bandkassette (12) zwei Spulen beherbergt, wobei ein Ende eines Vorlaufbandes (13) an einer Spule befestigt ist und ein Ende des Magnetbandes (22) mit dem anderen Ende des Vorlaufbandes (13) durch ein Klebestellenband verbunden ist und dann das Magnetband gespult wird, wobei, nachdem das Magnetband um einen bestimmten Betrag gespult ist, das andere Ende des Magnetbandes mit dem anderen Ende des Vorlaufbandes verbunden wird, welches an der anderen Spule mittels des Klebebands verbunden ist.

## Revendications

1. Appareil pour enrouler une bande dans une cassette à bande (12) comprenant un moteur (34) pour entraîner en rotation une bobine de ladite cassette à bande (12) sur laquelle la bande magnétique doit être enroulée et un appareil pour commander une tension de bande dans lequel une partie de mou (22) d'une bande est introduite à l'intérieur d'une chambre sous vide (23), ladite bande (22) est absorbée par une pression négative à l'intérieur de ladite chambre sous vide (23) et une tension de bande est détectée sur la base d'une quantité absorbée de ladite bande (22), caractérisé en ce qu'un évidement (30) est formé sur une surface interne de ladite chambre sous vide (23) afin de constituer une voie de fuite de vide au-delà de la bande (22), la section en coupe dudit évidement variant suivant la direction de déplacement de la bande absorbée en fonction de la tension qui varie et ainsi, la fuite de vide au-delà de la bande via l'évidement varie en réponse à la quantité absorbée de ladite bande qui varie en fonction de la tension de bande, et la variation de pression derrière la bande en réponse à la fuite est détectée par une jauge de pression, et dans lequel le couple du moteur (34) pour entraîner en rotation la bobine de ladite cassette à bande (12) autour de laquelle ladite bande magnétique est enroulée est commandé sur la base de la valeur détectée.

2. Appareil selon la revendication 1, dans lequel l'évidement (30) est positionné de manière à faire face à la partie d'extrémité de ladite bande (22) suivant sa direction de largeur.

3. Appareil selon la revendication 1 ou 2, dans lequel la largeur de l'évidement varie afin de constituer ladite section en coupe variable.

4. Appareil selon la revendication 1, 2 ou 3, dans lequel la profondeur de l'évidement varie afin de constituer ladite section en coupe variable.

5. Appareil selon l'une quelconque des revendications 1 à 4, dans lequel la section en coupe de l'évidement diminue suivant la direction de déplacement de bande quand la tension augmente.

6. Appareil selon l'une quelconque des revendications 1 à 4, dans lequel la section en coupe de l'évidement augmente suivant la direction de déplacement de bande quand la tension augmente.

7. Appareil pour enrouler une bande magnétique à l'intérieur d'une cassette à bande selon l'une quelconque des revendications précédentes, dans lequel ladite cassette à bande (12) loge deux bobines où une extrémité d'une bande de tête (13) est fixée à une bobine et une extrémité de ladite bande magnétique (22) est connectée à l'autre extrémité de ladite bande de tête (13) au moyen d'une bande de raccordement puis ladite bande magnétique est enroulée tandis qu'après que ladite bande magnétique est enroulée d'une valeur prédéterminée, l'autre extrémité de ladite bande magnétique est connectée à l'autre extrémité de ladite bande de tête fixée à l'autre bobine au moyen de ladite bande de raccordement.
